(19) Europäisches Patentamt
European Patent Office
Office européen des brevets

(11) EP 2 799 789 B1

(12) **EUROPEAN PATENT SPECIFICATION**

(45) Date of publication and mention
of the grant of the patent:
**19.07.2017  Bulletin 2017/29**

(51) Int Cl.:
*F24F 11/00* *(2006.01)*        *F04D 27/00* *(2006.01)*

(21) Application number: **13382160.3**

(22) Date of filing: **30.04.2013**

(54) **Method and system for automatically adjusting the operation of a fan and a computer program implementing the method**

Verfahren und System zur automatischen Anpassung des Betriebs eines Lüfters und Computerprogramm zur Implementierung des Verfahrens

Procédé et système permettant de régler automatiquement le fonctionnement d'un ventilateur et programme informatique mettant en 'uvre ledit procédé

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.11.2014  Bulletin 2014/45**

(73) Proprietor: **Gidelmar, S.A.**
**Montevideo (UY)**

(72) Inventor: **Bica Caffera, Gabriel Alejandro**
**Montevideo (UY)**

(74) Representative: **Temiño Ceniceros, Ignacio**
**Calle Amador de los Rios 1-1°**
**28010 Madrid (ES)**

(56) References cited:
**WO-A1-2011/092756      US-A1- 2009 134 823**
**US-A1- 2012 009 863      US-B1- 7 027 721**

**Description**

Field of the Art

In a first aspect, the present invention generally relates to a method for automatically adjusting the operation of a fan which comprises varying the rotational speed thereof depending on a selected operating criterion, and more particularly to a method which comprises calculating the actual working point of the fan and using it for carrying out said variation of the rotational speed of the fan.

A second aspect of the invention relates to a system for automatically adjusting the operation of a fan implementing the method of the first aspect.

A third aspect of the invention relates to a computer program implementing the steps of the method of the first aspect.

Prior State of the Art

Different control methods and systems for controlling a fan by means of varying the rotational speed thereof depending on a selected operating criterion, such as maintaining a constant pressure or flow rate, obtaining maximum performance, minimum consumption, etc., are known.

A series of patent documents disclosing some of such control methods or systems are briefly mentioned and described below.

Application EP1840476A2 proposes controlling a fan of an air flow apparatus for the purpose of maintaining a constant pressure based on signals sent by different sensors, such as occupancy sensors, pressure sensors, air flow sensors, $CO_2$ sensors or air velocity sensors.

JP2008116086 proposes controlling a fan of an air conditioning apparatus for maintaining a constant flow rate based on signals sent by different sensors, including humidity and temperature sensors.

Patent FR2835598B1 proposes a system including a casing which houses an extractor fan connected through several ducts to the various apartments of a building, and incorporating a pressure detector inside the casing for the purpose of performing constant pressure control based on the measurements taken with said pressure sensor by varying the rotational speed of the fan.

Both JP2005312227 and JP2008043083 propose performing a "sensor-less" fan control for maintaining a constant flow rate, which control is carried out based on the position and rotational speed of the fan that are not obtained by means of sensors but rather calculated from the measurements of electrical consumption signals of the fan motor.

Patent ES2343161B1 proposes a system for automatically adjusting the pressure of a fan depending on the required flow rate based on readings from a pressure sensor and including, stored in a memory of a logic unit, a reference flow rate/pressure curve above which a band or working area for the fan is defined, the new rotational speed to be applied to the fan being calculated from the detected actual rotational speed value and from the detected actual pressure.

Patent US6462494 proposes controlling the rotational speed of a fan by calculating the rotational speed to be applied, referred to as the required rotational speed, without using pressure sensors or flow rate sensors but rather from the actual rotational speed of the fan measured with a sensor, from the current circulating through the fan motor or powering it, and from a plurality of additional parameters, including fan-specific data or data relating to same (diameter and/or air density and/or fan coefficients and/or motor coefficients), and from an artificial characteristic curve (i.e., it does not belong to the characteristic curves themselves of the fan), only linking pressure with flow rate.

Even though US6462494 proposes obtaining a working point of the fan, this point is obtained from the calculation of the torque which is in turn established, among others, from specific torque measurements for each motor, and it does not propose using the torque obtained for creating the artificial characteristic curve.

The calculation of the artificial characteristic curve of US6462494 is rather complex and it takes into account measured values of fan motor parameters.

US2012/009863 discloses a method according to the preamble of claim 1.

None of the mentioned documents proposes obtaining the actual working point of the fan by means of performing a calculation performed on characteristic curves of the fan and using it for carrying out the variation of the rotational speed of the fan.

Even if the person skilled in the art wanted to control the rotational speed of the fan using, to that end, the working point determined directly from the characteristic curves thereof, the working point determined in such a manner would not be the actual working point in most cases because, due to the limited number of both curves and points forming each curve, it is virtually impossible to perform such determination by directly finding a recorded point in any of the curves which corresponds with the actual working point at all times.

Description of the Invention

In view of the foregoing, it is necessary to offer an alternative to the state of the art which overcomes the drawbacks existing therein, which allows dispensing with pressure and flow rate sensors like US6462494 does, but offers a less complex solution than that offered by said patent.

For such purpose, in a first aspect the present invention relates to a method for automatically adjusting the operation of a fan, which comprises:

- determining (generally by means of direct or indirect measurement) the actual rotational speed value of the fan;
- measuring the electric current consumed by the fan;
- establishing the new rotational speed value for the fan, calculating it based on a selected operating criterion (such as constant pressure, constant flow rate, minimum consumption, maximum performance, etc.), using the determined actual rotational speed value and the measured value of the electric current consumed by the fan.

Unlike the known proposals, the method proposed by the first aspect of the present invention characteristically comprises determining the actual electrical power consumed by the fan motor from said measured value of the electric current consumed by the fan, and calculating the actual working point of the fan from several characteristic curves of the fan and based on said actual speed value and actual electrical power value, the method comprising using said calculated actual working point for establishing the new rotational speed value for the fan.

According to a preferred embodiment, when there is no point in said characteristic curves of the fan linking the actual rotational speed value of the fan with the actual electrical power value, the method comprises calculating an estimated intersecting point, which is said working point, by means of the following steps:

- determining two points in two characteristic curves of two different rotational speeds linking electrical power with flow rate, one point per curve, where said two rotational speeds are a first rotational speed with a value less than that of the actual rotational speed, and a second rotational speed with a value greater than that of the actual rotational speed, and
- interpolating said two points, the result of said interpolation being the actual working point.

According to one embodiment, when said two points are not among the recorded points of said two characteristic curves of the first and second rotational speeds, respectively, the method proposed by the first aspect of the invention comprises determining them by interpolating the two closest points of the corresponding characteristic curve thereof.

In a subsequent section relating to the detailed description of several embodiments, both the determination by interpolating said two points, referred to as x1, x2, and the determination of the working point, referred to as x, obtained by interpolating said points, will be described in further detail in reference to the attached drawings, according to different embodiments.

According to several alternative or complementary embodiments, the method comprises determining the flow rate and/or pressure value corresponding to the actual working point, comparing it with a set point value, and determining the new rotational speed value for the fan depending on the result of said comparison.

According to one embodiment, the method proposed by the first aspect of the invention comprises using a proportional-integral control for obtaining the new rotational speed from the calculated actual working point, using the determined pressure and/or flow rate associated therewith.

A second aspect of the invention relates to a system for automatically adjusting the operation of a fan, comprising a control unit with a memory with at least one characteristic curve stored therein and with access to information about the actual rotational speed of a fan, said control unit being suitable for establishing a new rotational speed value for the fan based on a selected operating criterion, using at least the actual rotational speed value and at least said characteristic curve of the fan.

Unlike the known systems for adjusting, in the system proposed by the second aspect of the invention said memory has a plurality of characteristic curves of the fan recorded therein, and said control unit implements the method of the first aspect of the invention.

A third aspect of the invention relates to a computer program including instructions implementing the steps of the method of the first aspect when run in a computer or in any other class of device with computing capacity, the most common computing device being the microcontroller integrated in the same circuit which controls the speed of the fan motor and which also generally includes the memory where the characteristic curves are stored.

Brief Description of the Drawings

The foregoing and other advantages and features will be better understood based on the following detailed description of several embodiments in reference to the attached drawings which must be interpreted in an illustrative and non-limiting manner, in which:

Figure 1 is a graph linking pressure with flow rate and including several characteristic curves of a fan corresponding to different rotational speeds thereof to be used by the method and the system proposed by the present invention for one embodiment;

Figure 2 is a graph linking electrical power with flow rate for several characteristic curves of a fan corresponding to different rotational speeds thereof to be used by the method and the system proposed by the present invention for one embodiment;

Figure 3 illustrates the different possible theoretical interpolation points in a graph linking electrical power with flow rate and showing two portions of two characteristic curves thereof for two rotational speeds;

Figure 4 shows the power-flow rate interpolation carried out in respective curves of different rotational speeds for finding the working point x according to one embodiment of the method proposed by the first aspect of the invention; and

Figure 5 shows the pressure-flow rate interpolation carried out in respective curves of different rotational speeds for finding the working point x according to another embodiment of the method proposed by the first aspect of the invention.

Detailed Description of Several Embodiments

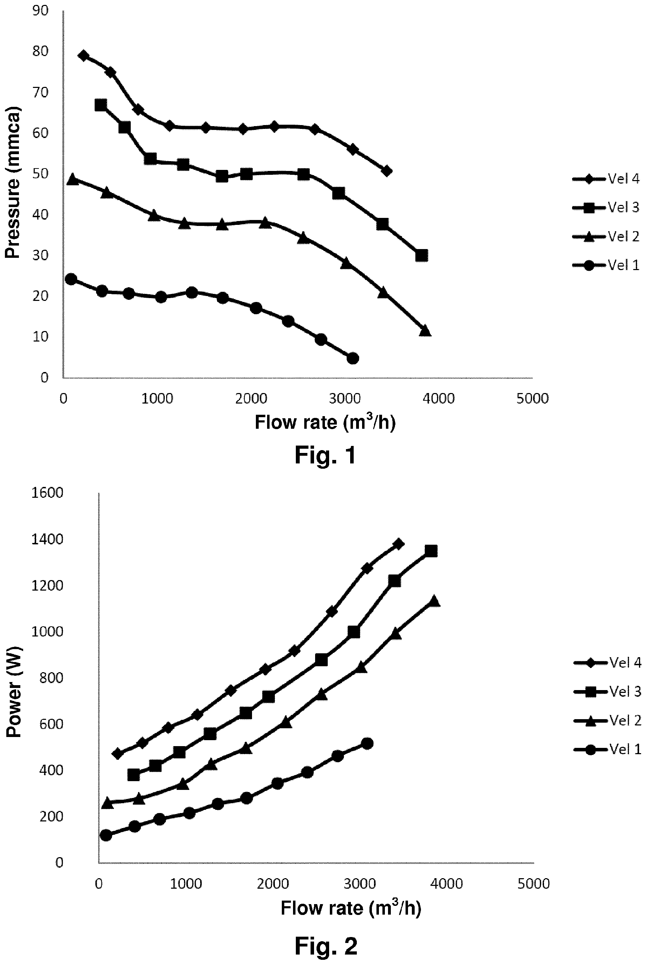

Figures 1 and 2 illustrate, by way of example, several characteristic curves of a fan used by the method and the system proposed by the present invention. These curves or similar curves are used for calculating the flow rate and/or pressure corresponding to the actual working point.

The actual working point is characterized by a speed and an electrical power that can be calculated from the voltage and the intensity adsorbed by the fan motor.

As indicated in a preceding section, since such working point can be located in any speed and power point and only a limited number of curves is available and each curve further contains a limited number of points, the working point must be found by means of double interpolation: first to find two equivalent points in two adjacent curves and then to find the actual point between this pair of points.

Therefore, for several preferred embodiments a good part of the precision of the method proposed by the first aspect of the invention depends on the choice of these equivalent points.

For the embodiments described herein, a pair of points ideally with the same flow rate value will be sought since these points will be rather close to one another and their interpolation will therefore be more precise.

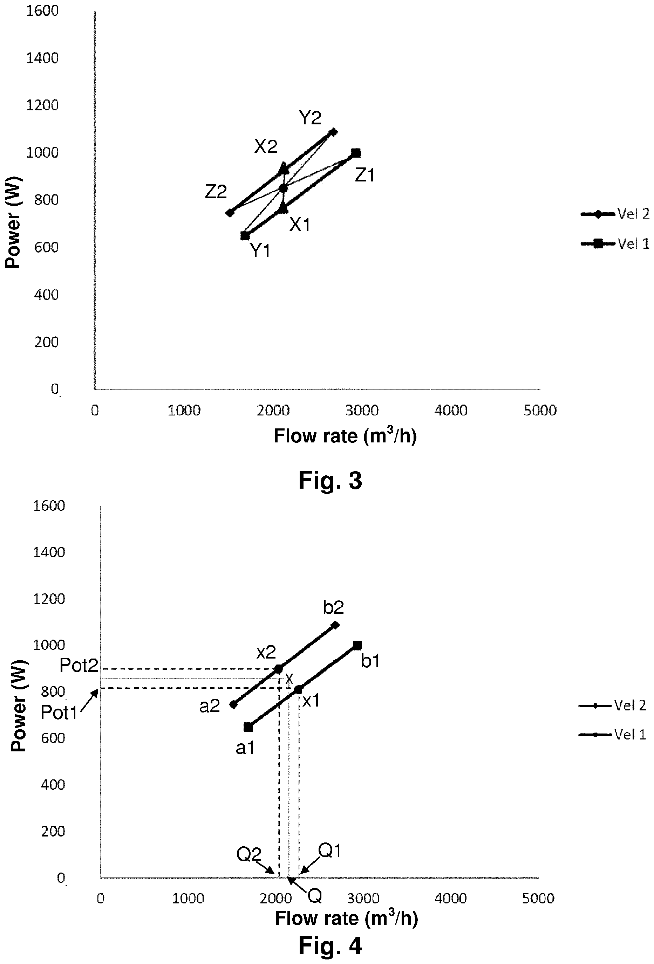

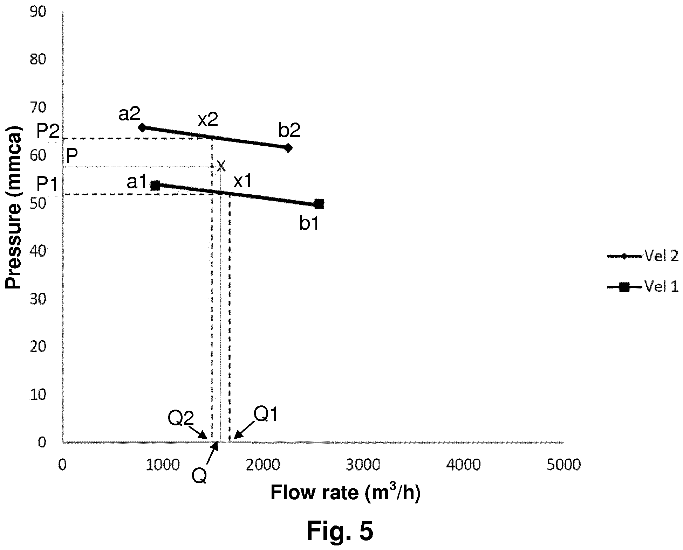

As seen in Figure 3, which shows respective portions of two different speed curves of power-flow rate, the distance between the points X1 and X2 is less than the distance between Y1 and Y2, or between Z1 and Z2, and furthermore the flow rate values for X1 and X2 are virtually the same (in fact for Figure 3 the values are the same because Figure 3 shows an ideal situation), so the interpolation thereof hardly introduces more error. This is why, for the embodiments of the method proposed by the first aspect of the invention described herein, the working point will be sought by interpolating between two points of two different speed curves, which points are similar to X1, X2 and are illustrated and indicated in Figures 4 and 5 as points x1 and x2, the determination of which, also by interpolation, will be described below, the working point having been indicated in said drawings with the reference x.

For carrying out the determination of the two points x1, x2, the method of the first aspect of the invention comprises being based on the hypothesis that the electrical power consumed at a constant flow rate, at different speeds complies with the following function:

$$\text{Pot} = a + K \cdot \text{Vel}^n$$

where a is a term that does not depend on speed, K is a constant with a randomly assigned value or a value obtained in a prior calculation and Vel is the actual rotational speed.

Depending on the embodiment, n has a value greater than 1, preferably between 2.5 and 3.5, and yet more preferably equal to or substantially equal to 3.

According to the embodiment illustrated in Figure 4, the method comprises obtaining said two points x1, x2 by means of performing the following steps:

a) determining, from the actual rotational speed Vel value, the immediately lower and higher speed curves which correspond to those referred to above as the first rotational speed Vel1 and the second rotational speed Vel2,

respectively;

b) assuming a value of K or using a value obtained in a prior calculation, such that $Pot = a + K \cdot Vel^n$ at a constant flow rate;

c) calculating the electrical power Pot1, Pot2 values which would correspond to the first rotational speed Vel1 and to the second rotational speed Vel2, maintaining the actual flow rate, by means of the following expressions:

$$Pot1 = Pot + K \cdot (Vel1^n - Vel^n)$$

$$Pot2 = Pot + K \cdot (Vel2^n - Vel^n)$$

and

d) determining said two points x1, x2 associated with the Pot1 and Pot2 values, respectively:

  d1) by directly obtaining them from the characteristic curves Vel1, Vel2, when they are among the recorded points in the curves (non-illustrated case); or
  d2) if they are not among said recorded points (illustrated case), by carrying out said interpolation of the two closest points a1, b1; a2, b2 of the corresponding characteristic curve thereof.

According to one embodiment, the method comprises determining the flow rate Q value corresponding to the actual working point x, obtained by means of interpolating the two points x1, x2, comparing it with a set point value, and determining the new rotational speed Vaj value for the fan depending on the result of said comparison, using to that end any equation known by a person skilled in the art.

For carrying out said calculation of the flow rate Q value, according to one variant of said embodiment (see Figure 4) the method comprises:

  e) finding the flow rate Q1 value corresponding to the point x1 associated with the power Pot1 by means of the following expression:

$$Q1 = Q(a1) + (Pot1 - Pot(a1)) \cdot (Q(b1) - Q(a1)) / (Pot(b1) - Pot(a1))$$

where Q(a1) and Q(b1) respectively represent the flow rates of the closest points a1 and b1 found in the characteristic curve Vel1 thereof, and Pot(a1) and Pot(b1) represent the electric powers thereof;

  f) finding the flow rate Q2 value corresponding to the point x2 associated with the power Pot2 by means of the following expression:

$$Q2 = Q(a2) + (Pot2 - Pot(a2)) \cdot (Q(b2) - Q(a2)) / (Pot(b2) - Pot(a2))$$

where Q(a2) and Q(b2) respectively represent the flow rates of the closest points a2 and b2 found in the characteristic curve Vel2 thereof, and Pot(a2) and Pot(b2) represent the electric powers thereof;

  g) comparing the flow rate Q1 and Q2 values, and if their difference is above a threshold, correcting the value of K and returning to step c); otherwise continuing with step f); and

  f) obtaining the flow rate Q value of said two points x1, x2, linearly interpolating between Q1 and Q2, by means of the following expression:

$$Q = Q1 + (Vel - Vel1) \cdot (Q2 - Q1) / (Vel2 - Vel1)$$

According to another alternative or complementary embodiment referring to the determination of the flow rate Q value, the method proposed by the first aspect of the invention comprises determining the pressure P value corresponding to the actual working point x obtained by means of interpolating the two points x1, x2, comparing it with a set point value, and determining the new rotational speed Vaj value for the fan depending on the result of said comparison.

For one variant of said embodiment illustrated in Figure 5, for carrying out said calculation of the pressure P value, the method comprises performing the following steps, using characteristic curves of the fan for different rotational speeds linking pressure with flow rate:

i) reading in the speed curve of Vel1 the pressure values corresponding to the two points a1, b1 closest to the point x1, and interpolating using one of the following expressions:

$$P1=P(a1)+(Pot1-Pot(a1))\cdot(P(b1)-P(a1))/(Pot(b1)-Pot(a1))$$

$$P1=P(a1)+(Q1-Q(a1))\cdot(P(b1)-P(a1))/(Q(b1)-Q(a1))$$

where P(a1) and P(b1) respectively represent said pressure values corresponding to the points a1 and b1, respectively;

ii) reading in the speed curve of Vel2 the pressure values corresponding to the two points a2, b2 closest to the point x2, and interpolating using one of the following expressions:

$$P2=P(a2)+(Pot2-Pot(a2))\cdot(P(b2)-P(a2))/(Pot(b2)-Pot(a2))$$

$$P2=P(a2)+(Q2-Q(a2))\cdot(P(b2)-P(a2))/(Q(b2)-Q(a2))$$

where P(a2) and P(b2) respectively represent said pressure values corresponding to the points a2 and b2, respectively; and

iii) obtaining the pressure P value of the two points x1, x2, linearly interpolating between P1 and P2 by means of the following expression:

$$P = \sqrt{P1^2+(Vel-Vel1)\cdot(P2^2 - P1^2)/(Vel2-Vel1)}$$

It must be indicated that the portions of the curve of Figures 4 and 5 are schematic and have been depicted such that they allow better viewing of the different points forming the portions, and therefore of the application of the method on same for interpolating such points with respect to what would be allowed by more realistic curves (for example with less slope).

With both the embodiment relating to the calculation of the flow rate Q value and the embodiment for the calculation of the pressure P value, or with a combination thereof, the working point of the fan can thus be determined without using pressure and flow rate sensors, and the rotational speed of the fan motor can be varied based on said calculated working point, for example by means of a proportional-integral (PI) control, using any equation known by a person skilled in the art, such as the following equation, to find the new rotational speed, i.e the set point speed, in the event that the calculated value was the pressure P value:

$$V_{aj} = V \cdot \sqrt[2]{\frac{P_{aj}}{P}}$$

where $P_{aj}$ is the pressure to be adjusted, i.e., the desired pressure which corresponds to a constant pressure if the selected operating criterion is to maintain said constant pressure,.

A person skilled in the art would be able to introduce changes and modifications in the described embodiments without departing from the scope of the invention as defined in the attached claims.

## Claims

1. A method for automatically adjusting the operation of a fan, of the type which comprises:

- determining the actual rotational speed (Vel) value of the fan;
- measuring the electric current consumed by the fan;
- establishing the new rotational speed (Vaj) value for the fan, calculating it based on a selected operating criterion, using at least the determined actual rotational speed (Vel) value and the measured value of the electric current consumed by the fan;

wherein the method further comprises determining the actual electrical power (Pot) consumed by the fan motor from said measured value of the electric current consumed by the fan, calculating the actual working point (x) of the fan from several characteristic curves of the fan and based on said actual speed (Vel) value and actual electrical power (Pot) value, and using said calculated actual working point (x) for establishing the new rotational speed (Vaj) value for the fan;

the method being **characterized in that**: when there is no point in said characteristic curves of the fan linking said actual rotational speed (Vel) value of the fan with said actual electrical power (Pot) value, the method comprises calculating an estimated intersecting point, which is said working point (x), by means of the following steps:

- determining two points (x1, x2) in two characteristic curves of two different rotational speeds linking electrical power with flow rate, one point per curve, where said two rotational speeds are a first rotational speed (Vel1) with a value less than that of the actual rotational speed (Vel), and a second rotational speed (Vel2) with a value greater than that of the actual rotational speed (Vel), and
- interpolating said two points (x1, x2), the result of said interpolation being the actual working point (x).

2. The method according to claim 1, **characterized in that** when said two points (x1, x2) are not among the recorded points of said two characteristic curves of the first rotational speed (Vel1) and the second rotational speed (Vel 2), respectively, the method comprises determining them by interpolating the two closest points (a1, b1; a2, b2) of the corresponding characteristic curve thereof.

3. The method according to claim 1 or 2, **characterized in that** for carrying out at least said determination of said two points (x1, x2), the method comprises being based on the hypothesis that the electrical power consumed at a constant flow rate, at different speeds complies with the following function:

$$\text{Pot} = a + K \cdot \text{Vel}^n$$

where a is a term that does not depend on speed, K is a constant with a randomly assigned value or a value obtained in a prior calculation and Vel is the actual rotational speed.

4. The method according to claim 3, **characterized in that** it comprises obtaining said two points (x1, x2) by means of performing the following steps:

a) determining, from the actual rotational speed (Vel) value, the immediately lower and higher speed curves which correspond to said first rotational speed (Vel1) and with said second rotational speed (Vel2), respectively;
b) assuming a value of K or using a value obtained in a prior calculation, such that $\text{Pot} = a + K \cdot \text{Vel}^n$ at a constant flow rate;
c) calculating the electrical power (Pot1, Pot2) values which would correspond to the first rotational speed (Vel1) and to the second rotational speed (Vel2), maintaining the actual flow rate, by means of the following expressions:

$$\text{Pot1} = \text{Pot} + K \cdot (\text{Vel1}^n - \text{Vel}^n)$$

$$\text{Pot2} = \text{Pot} + K \cdot (\text{Vel2}^n - \text{Vel}^n)$$

where Vel1 and Vel2 are the first rotational speed and the second rotational speed, respectively; and
d) determining said two points (x1, x2) associated with the Pot1 and Pot2 values, respectively:

d1) by directly obtaining them from the characteristic curves (Vel1, Vel2) when they are among the recorded points in the curves; or

d2) if they are not among said recorded points, by carrying out said interpolation of the two closest points (a1, b1; a2, b2) of the corresponding characteristic curve thereof.

5. The method according to claim 4, **characterized in that** it comprises determining the flow rate (Q) value corresponding to the actual working point (x) obtained by means of said interpolation of said two points (x1, x2), comparing it with a set point value, and determining the new rotational speed (Vaj) value for the fan depending on the result of said comparison.

6. The method according to claim 5, **characterized in that** for carrying out said calculation of the flow rate (Q) value, the method comprises:

e) finding the flow rate (Q1) value corresponding to the point (x1) associated with the power Pot1 by means of the following expression:

$$Q1=Q(a1)+(Pot1-Pot(a1))\cdot(Q(b1)-Q(a1))/(Pot(b1)-Pot(a1))$$

where Q(a1) and Q(b1) respectively represent the flow rates of the closest points a1 and b1 found in the characteristic curve (Vel1) thereof, and Pot(a1) and Pot(b1) represent the electric powers thereof;
f) finding the flow rate (Q2) value corresponding to the point (x2) associated with the power Pot2 by means of the following expression:

$$Q2=Q(a2)+(Pot2-Pot(a2))\cdot(Q(b2)-Q(a2))/(Pot(b2)-Pot(a2))$$

where Q(a2) and Q(b2) respectively represent the flow rates of the closest points a2 and b2 found in the characteristic curve (Vel2) thereof, and Pot(a2) and Pot(b2) represent the electric powers thereof;
g) comparing the flow rate Q1 and Q2 values, and if their difference is above a threshold, correcting the value of K and returning to step c); otherwise continuing with step f); and
f) obtaining the flow rate (Q) value of said two points (x1, x2), linearly interpolating between Q1 and Q2, by means of the following expression:

$$Q=Q1+(Vel-Vel1)\cdot(Q2-Q1)/(Vel2-Vel1)$$

7. The method according to claim 4, **characterized in that** it comprises determining the pressure (P) value corresponding to the actual working point (x) obtained by means of said interpolation of said two points (x1, x2), comparing it with a set point value, and determining the new rotational speed (Vaj) value for the fan depending on the result of said comparison.

8. The method according to claim 7, **characterized in that** for carrying out said calculation of the pressure (P) value, the method comprises performing the following steps, using characteristic curves of the fan for different rotational speeds linking pressure with flow rate:

i) reading in the speed curve of Vel1 the pressure values corresponding to the two points (a1, b1) closest to the point x1, and interpolating using one of the following expressions:

$$P1=P(a1)+(Pot1-Pot(a1))\cdot(P(b1)-P(a1))/(Pot(b1)-Pot(a1))$$

$$P1=P(a1)+(Q1-Q(a1))\cdot(P(b1)-P(a1))/(Q(b1)-Q(a1))$$

where P(a1) and P(b1) respectively represent said pressure values corresponding to the points a1 and b1, respectively;
ii) reading in the speed curve of Vel2 the pressure values corresponding to the two points (a2, b2) closest to the point x2, and interpolating using one of the following expressions:

$$P2=P(a2)+(Pot2-Pot(a2))\cdot(P(b2)-P(a2))/(Pot(b2)-Pot(a2))$$

$$P2=P(a2)+(Q2-Q(a2))\cdot(P(b2)-P(a2))/(Q(b2)-Q(a2))$$

where P(a2) and P(b2) respectively represent said pressure values corresponding to the points a2 and b2, respectively; and
iii) obtaining the pressure (P) value of said two points (x1, x2), linearly interpolating between P1 and P2, by means of the following expression:

$$P = \sqrt{P1^{2}+(Vel-Vel1)\cdot(P2^{2} - P1^{2})/(Vel2-Vel1)}$$

9. The method according to any one of the preceding claims, **characterized in that** said selected operating criterion is at least one from the group including the following operating criteria: constant pressure, constant flow rate and maximum performance.

10. The method according to any one of the preceding claims, **characterized in that** it comprises using a proportional-integral control for obtaining the new rotational speed (Vaj) from the calculated actual working point (x), using the determined pressure (P) and/or determined flow rate (Q) associated therewith.

11. The method according to any one of claims 3 to 8, **characterized in that** n has a value greater than 1, preferably between 2.5 and 3.5.

12. The method according to claim 11, **characterized in that** n has a value equal to 3.

13. A system for automatically adjusting the operation of a fan, of the type which comprises a control unit with a memory with at least one characteristic curve stored therein and with access to information about the actual rotational speed (Vel) of a fan, said control unit being suitable for establishing a new rotational speed (Vaj) value for the fan based on a selected operating criterion, using at least the actual rotational speed (Vel) value and at least said characteristic curve of the fan, the system being **characterized in that** said memory has a plurality of characteristic curves of the fan recorded therein, and **in that** said control unit implements the method according to any one of the preceding claims.

**Patentansprüche**

1. Verfahren zur automatischen Anpassung des Betriebs eines Lüfters, der Art umfassend:

- das Bestimmen des Wertes der tatsächlichen Umdrehungsgeschwindigkeit (Vel) des Lüfters;
- das Messen des vom Lüfter verbrauchten elektrischen Stroms;
- das Feststellen des neuen Wertes der Umdrehungsgeschwindigkeit (Vaj) für den Lüfter, unter Berechnung desselben basierend auf einem ausgewählten Betriebskriterium, unter Verwendung mindestens des bestimmten Wertes der tatsächlichen Umdrehungsgeschwindigkeit (Vel) und des gemessenen Wertes des vom Lüfter verbrauchten elektrischen Stroms;

wobei das Verfahren zusätzlich das Bestimmen der tatsächlichen elektrischen Leistung (Pot), welche vom Lüftermotor verbraucht wird, aus dem genannten gemessenen Wert des vom Lüfter verbrauchten elektrischen Stroms, das Berechnen des tatsächlichen Arbeitspunktes (x) des Lüfters aus mehreren Kennlinien des Lüfters und basierend auf dem Wert der tatsächlichen Geschwindigkeit (Vel) und dem Wert der tatsächlichen elektrischen Leistung (Pot), und das Verwenden des genannten berechneten tatsächlichen Arbeitspunktes (x) für das Feststellen des neuen Wertes der Umdrehungsgeschwindigkeit (Vaj) für den Lüfter, umfasst;
wobei das Verfahren **dadurch gekennzeichnet ist, dass**: wenn es keinen Punkt in den Kennlinien des Lüfters gibt, welcher den Wert der tatsächlichen Umdrehungsgeschwindigkeit (Vel) des Lüfters mit dem genannten Wert der tatsächlichen elektrischen Leistung (Pot) verbindet, das Verfahren das Berechnen eines geschätzten Schnittpunktes, welcher der genannte Arbeitspunkt (x) ist, mittels der folgenden Schritte umfasst:

- das Bestimmen zweier Punkte (x1, x2) in zwei Kennlinien aus zwei unterschiedlichen Umdrehungsgeschwindigkeiten, welche die elektrische Leistung mit der Durchflussrate, ein Punkt pro Linie, verbindet, wobei die genannten zwei Umdrehungsgeschwindigkeiten eine erste Umdrehungsgeschwindigkeit (Vel1), mit einem Wert unter demjenigen der tatsächlichen Umdrehungsgeschwindigkeit (Vel), und eine zweite Umdrehungsgeschwindigkeit (Vel2), mit einem Wert über demjenigen der tatsächlichen Umdrehungsgeschwindigkeit (Vel), sind, und
- das Interpolieren der genannten zwei Punkte (x1, x2), wobei das Ergebnis der genannten Interpolation der tatsächliche Arbeitspunkt (x) ist.

2. Verfahren nach Anspruch 1, **dadurch gekennzeichnet, dass** wenn die genannten zwei Punkte (x1, x2) jeweils nicht zu den erfassten Punkten der genannten zwei Kennlinien der ersten Umdrehungsgeschwindigkeit (Vel1) und der zweiten Umdrehungsgeschwindigkeit (Vel 2) gehören, das Verfahren das Bestimmen derselben durch das Interpolieren der zwei am nächsten liegenden Punkten (a1, b1; a2, b2) der entsprechenden Kennlinie derselben umfasst.

3. Verfahren nach Anspruch 1 oder 2, **dadurch gekennzeichnet, dass** für das Durchführen mindestens der genannten Bestimmung der genannten zwei Punkte (x1, x2), das Verfahren umfasst, dass es auf der Hypothese basiert, dass die elektrische Leistung, welche bei einer konstanten Durchflussrate und bei unterschiedlichen Geschwindigkeiten verbraucht wird, die folgende Funktion erfüllt:

$$Pot = a + K \cdot Vel^n$$

wobei a ein Term ist, der nicht von der Geschwindigkeit abhängt, K eine Konstante ist, mit einem willkürlich zugeordneten Wert oder einem aus einer vorhergehenden Berechnung erhaltenen Wert, und Vel die tatsächliche Umdrehungsgeschwindigkeit ist.

4. Verfahren nach Anspruch 3, **dadurch gekennzeichnet, dass** es das Erhalten der genannten zwei Punkte (x1, x2) mittels des Durchführens der folgenden Schritte umfasst:

a) das Bestimmen, aus dem Wert der tatsächlichen Umdrehungsgeschwindigkeit (Vel), der unmittelbar unteren und oberen Geschwindigkeitskurven, welche jeweils der genannten ersten Umdrehungsgeschwindigkeit (Vel1) und der genannten zweiten Umdrehungsgeschwindigkeit (Vel2) entsprechen;
b) das Annehmen eines Wertes für K oder das Verwenden eines aus einer vorhergehenden Berechnung erhaltenen Wertes, so dass $Pot = a + K \cdot Vel^n$ bei einer konstanten Durchflussrate;
c) das Berechnen der Werte der elektrischen Leistung (Pot1, Pot2), welche der ersten Umdrehungsgeschwindigkeit (Vel1) und der zweiten Umdrehungsgeschwindigkeit (Vel2) entsprechen würden, unter Einhaltung der tatsächlichen Durchflussrate, mittels der folgenden Ausdrücke:

$$Pot1 = Pot + K \cdot (Vel1^n - Vel^n)$$

$$Pot2 = Pot + K \cdot (Vel2^n - Vel^n)$$

wobei Vel1 und Vel2 jeweils die erste Umdrehungsgeschwindigkeit und die zweite Umdrehungsgeschwindigkeit sind; und
d) das Bestimmen der genannten zwei Punkte (x1, x2), welche jeweils mit den Werten Pot1 und Pot2 assoziiert sind:

d1) durch das direkte Erhalten derselben aus den Kennlinien (Vel1, Vel2), wenn sie zu den erfassten Punkten in den Linien gehören; oder
d2) wenn sie nicht zu den genannten erfassten Punkten gehören, durch das Durchführen der genannten Interpolation aus den zwei am nächsten liegenden Punkten (a1, b1; a2, b2) der entsprechenden Kennlinie derselben.

5. Verfahren nach Anspruch 4, **dadurch gekennzeichnet, dass** es das Bestimmen des Wertes der Durchflussrate (Q), welcher dem tatsächlichen Arbeitspunkt (x) entspricht, welcher mittels der genannten Interpolation der genannten zwei Punkte (x1, x2) erhalten wurde, das Vergleichen desselben mit einem Sollwert, und das Bestimmen des neuen Wertes der Umdrehungsgeschwindigkeit (Vaj) für den Lüfter in Abhängigkeit des Ergebnisses des genannten Vergleichs umfasst.

6. Verfahren nach Anspruch 5, **dadurch gekennzeichnet, dass** für das Durchführen der genannten Berechnung des Wertes der Durchflussrate (Q), das Verfahren Folgendes umfasst:

e) das Herausfinden des Wertes der Durchflussrate (Q1), welcher dem mit der Leistung Pot1 assoziierten Punkt (x1) entspricht, mittels des folgenden Ausdrucks:

$$Q1 = Q(a1) + (Pot1 - Pot(a1)) \cdot (Q(b1) - Q(a1)) / (Pot(b1) - Pot(a1))$$

wobei Q(a1) und Q(b1)jeweils die Durchflussraten der am nächsten liegenden Punkte a1 und b1, welche auf der Kennlinie (Vel1) derselben gefunden werden, darstellen, und Pot(a1) und Pot(b1) die elektrischen Leistungen derselben darstellen;
f) das Herausfinden des Wertes der Durchflussrate (Q2), welcher dem mit der Leistung Pot2 assoziierten Punkt (x2) entspricht, mittels des folgenden Ausdrucks:

$$Q2 = Q(a2) + (Pot2 - Pot(a2)) \cdot (Q(b2) - Q(a2)) / (Pot(b2) - Pot(a2))$$

wobei Q(a2) und Q(b2)jeweils die Durchflussraten der am nächsten liegenden Punkte a2 und b2 welche auf der Kennlinie (Vel2) derselben gefunden werden, darstellen, und Pot(a2) und Pot(b2) die elektrischen Leistungen derselben darstellen;
g) das Vergleichen der Werte der Durchflussrate Q1 und Q2, und wenn deren Unterschied über einer Schwelle liegt, das Korrigieren des Wertes für K und das Rückkehren zum Schritt e); ansonsten wird mit Schritt f) weitergemacht; und
f) das Erhalten des Wertes der Durchflussrate (Q) der genannten zwei Punkte (x1, x2), durch die lineare Interpolation zwischen Q1 und Q2, mittels des folgenden Ausdrucks:

$$Q = Q1 + (Vel - Vel1) \cdot (Q2 - Q1) / (Vel2 - Vel1)$$

7. Verfahren nach Anspruch 4, **dadurch gekennzeichnet, dass** es das Bestimmen des Wertes des Drucks (P). welcher dem tatsächlichen Arbeitspunkt (x) entspricht, welcher mittels der genannten Interpolation der genannten zwei Punkte (x1, x2) erhalten wurde, das Vergleichen desselben mit einem Sollwert, und das Bestimmen des neuen Wertes der Umdrehungsgeschwindigkeit (Vaj) für den Lüfter in Abhängigkeit des Ergebnisses des genannten Vergleichs, umfasst.

8. Verfahren nach Anspruch 7, **dadurch gekennzeichnet, dass** für das Durchführen der genannten Berechnung des Wertes des Druckes (P), das Verfahren das Durchführen der folgenden Schritte umfasst, unter Verwendung der Kennlinien des Lüfters für unterschiedliche Umdrehungsgeschwindigkeiten unter Verbindung des Druckes mit der Durchflussrate:

i) das Auslesen bei der Geschwindigkeitskurve aus Vel1 der Druckwerte, welche den zwei Punkten (a1, b1) entsprechen, die am nächsten am Punkt x1 liegen, und das Interpolieren unter Verwendung eines der folgenden Ausdrücke:

$$P1 = P(a1) + (Pot1 - Pot(a1)) \cdot (P(b1) - P(a1)) / (Pot(b1) - Pot(a1))$$

$$P1 = P(a1) + (Q1 - Q(a1)) \cdot (P(b1) - P(a1)) / (Q(b1) - Q(a1))$$

wobei P(a1) und P(b1) jeweils die genannten den Punkten a1 und b1 entsprechenden Druckwerte darstellen; ii) das Auslesen bei der Geschwindigkeitskurve aus Vel2 der Druckwerte, welche den zwei Punkten (a2, b2) entsprechen, die am nächsten am Punkt x2 liegen, und das Interpolieren unter Verwendung eines der folgenden Ausdrücke:

$$P2 = P(a2) + (Pot2 - Pot(a2)) \cdot (P(b2) - P(a2)) / (Pot(b2) - Pot(a2))$$

$$P2 = P(a2) + (Q2 - Q(a2)) \cdot (P(b2) - P(a2)) / (Q(b2) - Q(a2))$$

wobei P(a2) und P(b2) jeweils die genannten den Punkten a2 und b2 entsprechenden Druckwerte darstellen; und iii) das Erhalten des Wertes des Druckes (P) der genannten zwei Punkte (x1, x2), durch die lineare Interpolation zwischen P1 und P2, mittels des folgenden Ausdrucks:

$$P = \sqrt{P1^2 + (Vel - Vel1) \cdot (P2^2 - P1^2) / (Vel2 - Vel1)}$$

**9.** Verfahren nach einem der vorhergehenden Ansprüche, **dadurch gekennzeichnet, dass** das genannte ausgewählte Betriebskriterium mindestens eines aus der Gruppe beinhaltend die folgenden Betriebskriterien: konstanter Druck, konstante Durchflussrate und maximale Leistungsfähigkeit, ist.

**10.** Verfahren nach einem der vorhergehenden Ansprüche, **dadurch gekennzeichnet, dass** es das Verwenden einer Proportional-Integral-Regelung zum Erhalten der neuen Umdrehungsgeschwindigkeit (Vaj) aus dem berechneten tatsächlichen Arbeitspunkt (x), unter Verwendung des bestimmten Druckes (P) und/oder der damit assoziierten bestimmten Durchflussrate (Q), umfasst.

**11.** Verfahren nach einem der Ansprüche 3 bis 8, **dadurch gekennzeichnet, dass** n einen Wert größer als 1, vorzugsweise zwischen 2,5 und 3,5, aufweist.

**12.** Verfahren nach Anspruch 11, **dadurch gekennzeichnet, dass** n einen Wert gleich 3 aufweist.

**13.** System zur automatischen Anpassung des Betriebs eines Lüfters, der Art umfassend eine Steuereinheit mit einem Speicher, mit mindestens einer Kennlinie darin gespeichert und mit Zugang auf die Auskunft über der tatsächlichen Umdrehungsgeschwindigkeit (Vel) eines Lüfters, wobei die genannte Steuereinheit dazu geeignet ist, einen neuen Wert der Umdrehungsgeschwindigkeit (Vaj) für den Lüfter festzustellen, basierend auf einem ausgewählten Betriebskriterium, unter Verwendung mindestens des Wertes der tatsächlichen Umdrehungsgeschwindigkeit (Vel) und mindestens der genannten Kennlinie des Lüfters, wobei das System **dadurch gekennzeichnet ist, dass** der genannte Speicher eine Vielzahl von Kennlinien des Lüfters darin gespeichert aufweist, und dass die genannte Steuereinheit das Verfahren nach einem der vorhergehenden Ansprüche implementiert.

**Revendications**

**1.** Procédé de réglage automatique du fonctionnement d'un ventilateur, du type comprenant:

- la détermination de la valeur de la vitesse de rotation réelle (Vel) du ventilateur ;
- la mesure du courant électrique consommé par le ventilateur ;
- l'établissement de la nouvelle valeur de la vitesse de rotation (Vaj) pour le ventilateur, en la calculant sur la base d'un critère de fonctionnement choisi, utilisant au moins la valeur de la vitesse de rotation réelle déterminée (Vel) et la valeur mesurée du courant électrique consommé par le ventilateur ;

dans lequel le procédé comprend en outre la détermination de l'énergie électrique réelle (Pot) consommée par le moteur de ventilateur à partir de ladite valeur mesurée du courant électrique consommé par le ventilateur, en calculant le travail réel (x) du ventilateur à partir de plusieurs courbes caractéristiques du ventilateur et basé sur ladite valeur de vitesse réelle (Vel) la valeur de énergie électrique réelle (Pot), et utilisant ledit point de travail réel calculé (x) pour établir la nouvelle valeur de vitesse de rotation (Vaj) pour le ventilateur ;
le procédé étant **caractérisé en ce que** : lorsqu'il n'y a pas dans lesdites courbes caractéristiques du ventilateur reliant ladite valeur de vitesse de rotation actuelle (Vel) du ventilateur avec ladite valeur d'énergie électrique actuelle (Pot), le procédé comprend le calcul d'un point d'intersection estimé qui est ledit point de travail (x), au moyen des étapes suivantes :

- la détermination de deux points (x1, x2) dans deux courbes caractéristiques de deux vitesses de rotation différentes reliant l'énergie électrique avec le débit ; un point par courbe, où lesdites deux vitesses de rotation sont une première vitesse de rotation (Vel1) avec une valeur inférieure à celle de la vitesse de rotation réelle (Vel), et une deuxième vitesse de rotation (Vel2) avec une valeur supérieure à celle de la vitesse de rotation réelle (Vel), et
- l'interpolation desdits deux points (x1, x2), le résultat de ladite interpolation étant le point de travail réel (x).

2. Procédé selon la revendication 1, **caractérisé en ce que** lorsque lesdits deux points (x1, x2) ne se trouvent pas parmi les points enregistrés desdites deux courbes caractéristiques de la première vitesse de rotation (Vel1) et la deuxième vitesse de rotation (Vel2), respectivement, le procédé comprend la détermination de celles-ci en interpolant les deux points les plus proches (a1, b1 ;a2, b2) de leur courbe caractéristique.

3. 3.- Procédé selon la revendication 1 ou 2, **caractérisé en ce que** pour réaliser au moins ladite détermination desdits deux points (x1, x2), le procédé comprend le fait d'être basé sur l'hypothèse que l'énergie électrique consommée à un débit constant, à différentes vitesses est conforme à la fonction suivante :

$$Pot = a + K \cdot Vel^n$$

où a est un terme qui ne dépend pas de la vitesse, K est une constante avec une valeur assignée aléatoirement ou une valeur obtenue lors d'un calcul précédent et Vel est la vitesse de rotation réelle.

4. Procédé selon la revendication 3, **caractérisé en ce qu'**il comprend l'obtention desdits deux points (x1, x2) au moyen de la réalisation des étapes suivantes:

a) déterminer, à partir de la valeur de vitesse de rotation réelle (Vel), les courbes de vitesse immédiatement inférieure et supérieure qui correspondent à ladite première vitesse de rotation (Vel1) et à ladite deuxième vitesse de rotation (Vel2), respectivement ;
b) assumer une valeur de K en utilisant une valeur obtenue lors d'un calcul précédent, de manière que Pot = a + K.Veln à un débit constant ;
c) calculer les valeur d'énergie électrique (Pot1, Pot2) qui correspondraient à la première vitesse de rotation (Vel1) et à la deuxième vitesse de rotation (Vel2), en maintenant le débit réel, au moyen des expressions suivantes :

$$Pot1 = Pot + K \cdot (Vel1^n \text{-} Vel^n)$$

$$Pot2 = Pot + K \cdot (Vel2^n \text{-} Vel^n)$$

où Vel1 et Vel2 sont la première vitesse de rotation et la deuxième vitesse de rotation respectivement ; et
d) déterminer lesdits deux points (x1, x2) associés aux valeurs Pot1 et Pot2, respectivement :

d1) par leur obtention directe à partir des courbes caractéristiques (Vel1, Vel2) lorsqu'ils sont parmi les points enregistrés dans les courbes ; ou
d2) s'ils ne sont pas parmi les points enregistrés, en réalisant ladite interpolation des deux points les plus proches (a1, b1 ; a2, b2) de leur courbe caractéristique correspondante.

5. Procédé selon la revendication 4, **caractérisé en ce qu'**il comprend la détermination de la valeur de débit (Q) correspondant au point de travail réel (x) obtenu au moyen de ladite interpolation desdits deux points (x1, x2), sa comparaison avec une valeur de point établi, et la détermination de la nouvelle valeur de vitesse de rotation (Vaj) pour le ventilateur en fonction du résultat de ladite comparaison.

6. Procédé selon la revendication 5, **caractérisé en ce que** pour mettre en oeuvre ledit calcul de la valeur de débit (Q), le procédé comprend :

e) trouver la valeur de débit (Q1) correspondant au point (x1) associé à l'énergie Pot1 au moyen de l'expression suivante

$$Q1=Q(a1)+(Pot1-Pot(a1)) \cdot (Q(b1)-Q(a1))/(Pot(b1)-Pot(a1))$$

où Q(a1) et Q(b1) représentent respectivement les débits des points les plus proches a1 et b1 trouvés dans leur courbe caractéristique (Vel1), et Pot(a1) et Pot(b1) représentent leur énergie électrique ;
f) trouver la valeur de débit (Q2) correspondant au point (x2) associé à l'énergie Pot2 au moyen de l'expression suivante :

$$Q2=Q(a2)+(Pot2-Pot(a2)) \cdot (Q(b2)-Q(a2))/(Pot(b2)-Pot(a2))$$

où Q(a2) et Q(b2) représentent respectivement les débits des points les plus proches a2 et b2 trouvés dans leur courbe caractéristique (Vel2), et Pot(a2) et Pot(b1) représentent leur énergie électrique ;
g) comparer les valeurs de débit Q1 et Q2, et si leur différence est supérieure à un seuil, corriger la valeur de K et retourner à l'étape c) ; autrement continuer à l'étape f) ; et;
f) obtenir la valeur de débit (Q) desdits deux points (x1, x2), interpolant de manière linéaire entre Q1 et Q2, au moyen de l'expression suivante :

$$Q=Q1+(Vel-Vel1) \cdot (Q2-Q1)/(Vel2-Vel1)$$

7. Procédé selon la revendication 4, **caractérisé en ce qu'**il comprend la détermination de la valeur de pression (P) correspondant au point de travail réel (x) obtenu au moyen de ladite interpolation desdits deux points (x1, x2), la comparer avec une valeur de point établi, et détermination de la nouvelle valeur de vitesse de rotation (Vaj) pour le ventilateur en fonction du résultat de ladite comparaison.

8. Procédé selon la revendication 7, **caractérisé en ce que** pour la mise en oeuvre dudit calcul de la valeur de pression (P), le procédé comprend la réalisation des étapes suivantes ; utilisant des courbes caractéristiques du ventilateur pour différentes vitesses de rotation reliant la pression au débit

i) lecture dans la courbe de vitesse de Vel1 des valeurs de pression correspondant aux deux points (a1, b1) les plus proches du point x1, et l'interpolation en utilisant une des expressions suivantes :

$$P1=P(a1)+(Pot1-Pot(a1)) \cdot (P(b1)-P(a1))/(Pot(b1)-Pot(a1))$$

$$P1=P(a1)+(Q1-Q(a1)) \cdot (P(b1)-P(a1))/(Q(b1)-Q(a1))$$

où (P(a1) et P(b1) représentent respectivement lesdites valeurs de pression correspondant aux points a1 et b1 respectivement ;
ii) lecture dans la courbe de vitesse de Vel2 des valeurs de pression correspondant aux deux points (a2, b2) les plus proches du point x2, et l'interpolation en utilisant une des expressions suivantes :

$$P2=P(a2)+(Pot2-Pot(a2)) \cdot (P(b2)-P(a2))/(Pot(b2)-Pot(a2))$$

$$P2=P(a2)+(Q2-Q(a2))\cdot(P(b2)-P(a2))/(Q(b2)-Q(a2))$$

où (P(a2) et P(b2) représentent respectivement lesdites valeurs de pression correspondant aux points a2 et b2 respectivement ; et

iii) obtention de la valeur de pression (P) desdits deux points (x1, x2), interpolant de manière linéaire entre P1 et P2 au moyen de l'expression suivante :

$$P = \sqrt{P1^2+(\text{Vel-Vel1})\cdot(P2^2 - P1^2)/(\text{Vel2-Vel1})}$$

.

9.  Procédé selon l'une quelconque des revendications précédentes, **caractérisé en ce que** ledit critère de fonctionnement choisi est au moins un du groupe comportant les critères de fonctionnement suivants : pression constante, débit constant et performance maximale.

10. Procédé selon l'une quelconque des revendications précédentes, **caractérisé en ce qu'**il comprend l'utilisation d'une commande proportionnelle-intégrale pour obtenir la nouvelle vitesse de rotation (Vaj) à partir du point de travail réel calculé (x), en utilisant la pression déterminée (P) et/ou le débit déterminé (Q) associé.

11. Procédé selon l'une quelconque des revendications 3 à 8, **caractérisé en ce que** n a une valeur supérieure à 1, de préférence entre 2,5 et 3,5.

12. Procédé selon la revendication 11, **caractérisé en ce que** n a une valeur égale à 3.

13. Système de réglage automatique du fonctionnement d'un ventilateur, du type comprenant une unité de commande avec une mémoire avec au moins une courbe caractéristique mise en mémoire dans celle-ci et avec accès à l'information sur la vitesse de rotation réelle (Vel) d'un ventilateur, ladite unité de commande étant apte à établir une nouvelle valeur de vitesse de rotation (Vaj) pour le ventilateur basé sur un critère de fonctionnement choisi en utilisant au moins la valeur de vitesse de rotation réelle (Vel) et au moins ladite courbe caractéristique du ventilateur, le système étant **caractérisé en ce que** ladite mémoire a une pluralité de courbes caractéristiques du ventilateur enregistrées dans celui-ci, et **en ce que** ladite unité de commande met en oeuvre le procédé selon l'une quelconque des revendications précédentes.

**Fig. 1**

**Fig. 2**

Fig. 3

Fig. 4

Fig. 5

**EP 2 799 789 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1840476 A2
- JP 2008116086 B
- FR 2835598 B1
- JP 2005312227 B
- JP 2008043083 B
- ES 2343161 B1
- US 6462494 B
- US 2012009863 A